# EUROPEAN PATENT APPLICATION

(11) **EP 4 344 945 A1**
(43) Date of publication of application: **03.04.2024**
(21) Application number: 23197172.2
(22) Date of filing: 13.09.2023
(51) Int. Cl.: B60N 2/28

(54) **INTERNATIONAL STANDARDS ORGANIZATION FIX BUTTON RESET STRUCTURE AND SAFETY SEAT COMPRISING SAME**

(30) Priority: 29.09.2022 CN 202222600683 U
(71) Applicant: Ningbo Baby First Baby Products Co., Ltd., Yuyao, Zhejiang 315412 (CN)
(72) Inventor: PAN, Xiaolu, Sanqishi Town, Yuyao, Zhejiang, 315412 (CN); WANG, Youping, Sanqishi Town, Yuyao, Zhejiang, 315412 (CN)
(74) Representative: Thoma, Michael

(57) **Abstract**

The present disclosure provides an International Standards Organization FIX (ISOFIX) button reset structure and a safety seat including the same, and relates to the technical field of safety seats. The ISOFIX button reset structure includes an ISOFIX component and an ISOFIX button component. The ISOFIX component includes a fastening member, a connecting member, and a first reset member. The ISOFIX button component includes an unlock button and a button base. The connecting member abuts against the fastening member. A first end of the first reset member is connected to the fastening member, and a second end of the first reset member is connected to the connecting member. The unlock button is movably arranged in the button base and connected to the connecting member. The connecting member is configured to be driven by the first reset member to reset the unlock button. The safety seat includes the ISOFIX button reset structure. The present disclosure has the advantages of simple structure and low costs.

## Description

### TECHNICAL FIELD

The present disclosure relates to the technical field of safety seats, and particularly to an International Standards Organization FIX (ISOFIX) button reset structure and a safety seat including the same.

### BACKGROUND

At present, child safety seats are getting more and more attention from people. ISOFIX is the abbreviation of International Standards Organisation FIX, which is a new standard for securing child safety seats in vehicles. It is easier to secure child safety seats with ISOFIX than with seat belts. ISOFIX devices can effectively reduce the risk of incorrect installation of child safety seats, and significantly reduce the probability of incorrect installation of child safety seats.

ISOFIX devices are generally provided with an unlock button for unlocking a telescopic rod. To prevent misoperation, some ISOFIX devices are further provided with a secondary-lock unlock button.

However, the existing ISOFIX devices suffer from the following problems. In the design of ISOFIX devices, the telescopic rod and the unlock button are typically considered separately, that is, the telescopic rod and the unlock button are designed as two separate modules, which are then assembled. Therefore, the unlock button is usually designed with a reset mechanism, leading to a relatively complicated structure and increased production costs.

### SUMMARY

An objective of the present disclosure is to provide an ISOFIX button reset structure with a simplified structure and reduced production costs.

Another objective of the present disclosure is to provide a safety seat including the ISOFIX button reset structure described above.

To achieve one of the objectives of the present disclosure, the present disclosure adopts the following technical solutions. An ISOFIX button reset structure is provided, including an ISOFIX component and an ISOFIX button component, where the ISOFIX component includes a fastening member, a connecting member, and a first reset member, and the ISOFIX button component includes an unlock button and a button base; and the connecting member abuts against the fastening member, a first end of the first reset member is connected to the fastening member, a second end of the first reset member is connected to the connecting member, the unlock button is movably arranged in the button base and connected to the connecting member, and the connecting member is configured to be driven by the first reset member to reset the unlock button.

Preferably, the ISOFIX button reset structure further includes a secondary-lock button and a second reset member, where the secondary-lock button is movably arranged in the button base, the second reset member is arranged between the secondary-lock button and the button base to apply a continuous reset force on the secondary-lock button, the unlock button includes an abutting portion, the secondary-lock button includes a stop portion, and the stop portion abuts against the abutting portion under the reset force from the second reset member to allow the unlock button to remain in a locked state.

Preferably, the secondary-lock button is hingedly connected to the button base through a pin shaft, and the secondary-lock button includes a pressing portion.

Preferably, the fastening member includes a first contact portion and a second contact portion protruding relative to the first contact portion, the second contact portion includes a curved contact surface, the connecting member includes a third contact portion, the third contact portion abuts against the first contact portion when the fastening member is in a locked state, the third contact portion abuts against the second contact portion when the fastening member is in an unlocked state, and the first reset member is configured to drive the third contact portion to slide along the curved contact surface.

Preferably, the unlock button is slidably connected to the button base, the connecting member is connected to the unlock button through a connecting shaft, the ISOFIX component further includes a housing provided with a guide groove, and the connecting shaft is configured to slide along the guide groove.

Preferably, the connecting shaft is provided with a slip-proof structure, the slip-proof structure is a plurality of convex corrugations, and the plurality of the convex corrugations are triangular prism-shaped.

Preferably, the housing includes a first housing and a second housing, the first housing and the second housing are connected through a housing riveting shaft to form a mounting cavity, and the fastening member, the connecting member, and the first reset member are mounted in the mounting cavity.

Preferably, the housing riveting shaft includes a first housing riveting shaft and a second housing riveting shaft, the first housing riveting shaft is connected to the button base, and the fastening member is rotatably connected to the second housing riveting shaft.

Preferably, the connecting member is substantially elongated, the connecting member includes a connecting lug, the connecting lug is provided with a first mounting hole, the fastening member is provided with a second mounting hole, the first reset member is a tension spring, and the first mounting hole and the second mounting hole are configured for mounting the tension spring.

To achieve another objective of the present disclosure, the present disclosure adopts the following technical solution. A safety seat is provided, including the ISOFIX button reset structure described above.

Compared with the prior art, the present disclosure has the following advantages. With the use of the first reset member in the ISOFIX component as a reset mechanism for the unlock button, a linkage is formed between the fastening member and the unlock button, so that the reset structure designed in the ISOFIX button component for the unlock button in the prior art can be omitted, thereby simplifying the structure of the entire ISOFIX button component and reducing the production costs.

### BRIEF DESCRIPTION OF THE DRAWINGS

FIG. 1 is a schematic structural diagram of an ISOFIX button reset structure according to a preferred embodiment of the present disclosure.
FIG. 2 is a structural exploded view of the ISOFIX button reset structure.
FIG. 3 is a schematic structural diagram of an ISOFIX button component in a reset state according to a preferred embodiment of the present disclosure.
FIG. 4 is a schematic structural diagram of the ISOFIX button component shown in FIG. 3 in an unlocked state.
FIG. 5 is a schematic structural diagram of an ISOFIX component in a locked state according to a preferred embodiment of the present disclosure.
FIG. 6 is a schematic structural diagram of the ISOFIX component shown in FIG. 5 in an unlocked state.
FIG. 7 is a partial schematic structural diagram of an ISOFIX button reset structure according to a preferred embodiment of the present disclosure.

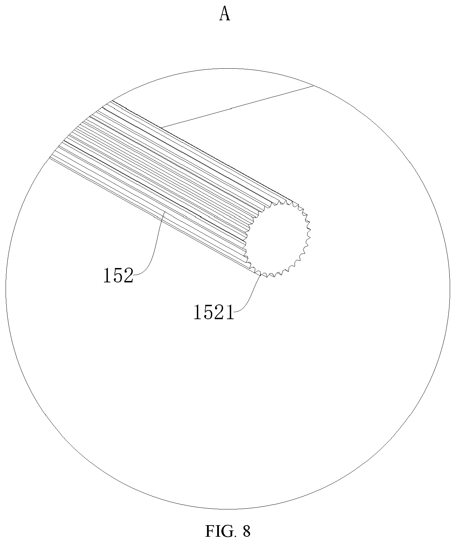

FIG. 8 is a schematic enlarged view of part A in FIG. 2.

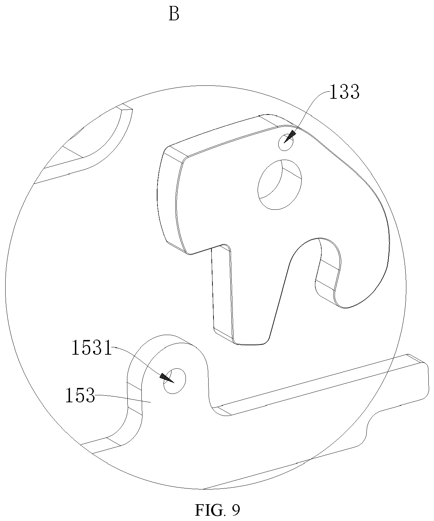

FIG. 9 is a schematic enlarged view of part B in FIG. 2.

In the drawings: 1. ISOFIX component; 11. first housing; 121. first housing riveting shaft; 122. second housing riveting shaft; 123. guide groove; 13. fastening member; 131. first contact portion; 132. second contact portion; 13a. curved contact surface; 133. second mounting hole; 14. first reset member; 15. connecting member; 151. third contact portion; 152. connecting shaft; 1521. slip-proof structure; 153. connecting lug; 1531. first mounting hole; 16. second housing;
2. ISOFIX button component; 20. second reset member; 21. pin shaft; 27. unlock button; 271. recessed groove; 28. button base; 29. secondary-lock button; 291. stop portion; 3. anchor rod on vehicle.

### DETAILED DESCRIPTION OF THE EMBODIMENTS

The present disclosure will be further described through specific embodiments. It should be noted that the embodiments or technical features described below may be arbitrarily combined to form new embodiments without conflict.

In the description of the present disclosure, it should be noted that orientation and position relationships indicated by the orientation terms such as "center", "transverse", "longitudinal", "length", "width", "thickness", "on", "below", "front", "rear", "left" , "right", "vertical", "horizontal", "top", "bottom", "inner", "outer", "clockwise", and "counterclockwise" are based on the orientation or positional relationships shown in the drawings, and are only for the convenience of describing the present disclosure and simplifying the description, rather than indicating or implying that the apparatus or element described must have a specific orientation or be constructed and operated in a specific orientation, and therefore are not to be construed as limiting the present disclosure.

It should be noted that in the specification and claims of the present disclosure, the terms "first", "second" or the like are intended to distinguish between similar objects but do not indicate a particular order or sequence.

In the specification and claims of the present disclosure, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiment 1: The present disclosure provides an ISOFIX button reset structure.

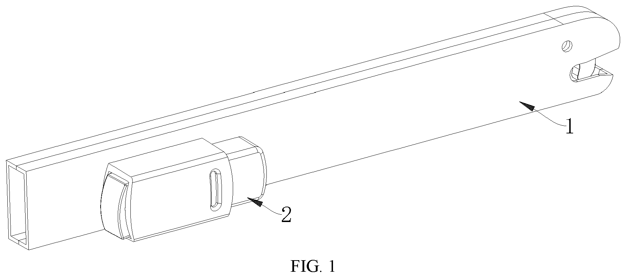

As shown in FIG. 1, the ISOFIX button reset structure includes an ISOFIX component 1 and an ISOFIX button component 2. The ISOFIX button component 2 is mounted on the ISOFIX component 1.

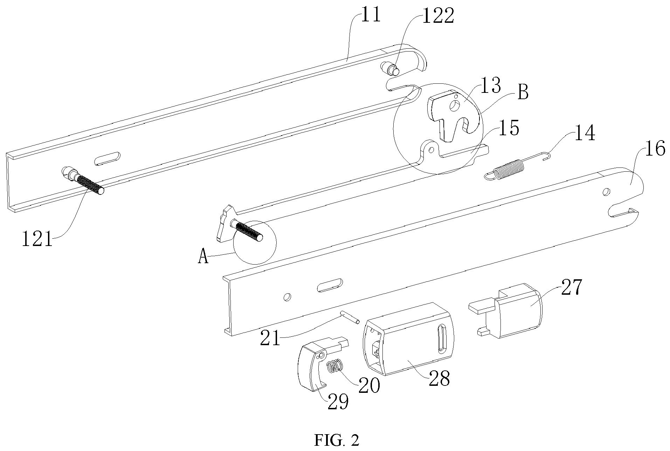

As shown in FIG. 2, the ISOFIX component 1 includes a fastening member 13, a connecting member 15, and a first reset member 14. The ISOFIX button component 2 includes an unlock button 27 and a button base 28. The connecting member 15 abuts against the fastening member 13. A first end of the first reset member 14 is connected to the fastening member 13, and a second end of the first reset member 14 is connected to the connecting member 15. The unlock button 27 is movably arranged in the button base 28 and connected to the connecting member 15. The connecting member 15 is configured to be driven by the first reset member 14 to reset the unlock button 27.

In the prior art, in the design of ISOFIX devices, the ISOFIX component and the ISOFIX button component are typically considered separately, that is, the ISOFIX component and the ISOFIX button component are designed as two separate modules, which are then assembled. Therefore, the unlock button is usually equipped with a corresponding reset mechanism, which generally includes a spring, and a cavity and a base for mounting and positioning the spring.

The present disclosure breaks through the mindset barriers, analyzes the unlocking and locking processes of the fastening member 13 with systematic thinking, and comprehensively considers the design of the ISOFIX component 1 and the design of the ISOFIX button component 2. The locking of the fastening member 13 is directly associated with the resetting of the unlock button 27 through the connecting member 15 and the first reset member 14. There is no need to arrange an elastic reset member for the unlock button 27 in the button base 28, and therefore, there is no need to reserve a space and a base for mounting the elastic reset member. Because one elastic reset member is omitted, the number of parts is reduced, the number of steps required for assembling the ISOFIX button is reduced, thereby reducing production costs. Moreover, because there is no need to design structures for mounting the elastic reset member on the button base 28 and the unlock button 27, the structures of the button base 28 and the unlock button 27 can be simplified, making the structure of the entire ISOFIX button component 2 more compact and reasonable.

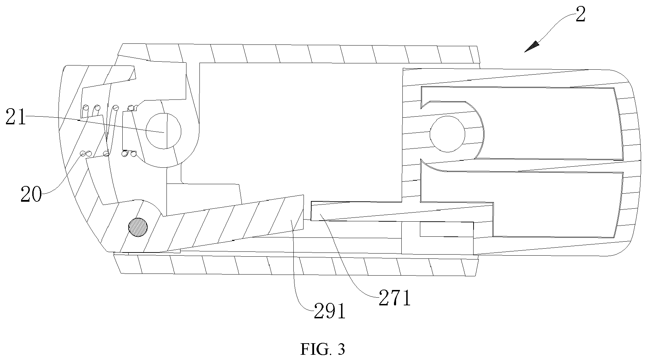

As shown in FIG. 3 to FIG. 4, the ISOFIX button reset structure further includes a secondary-lock button 29 and a second reset member 20. The secondary-lock button 29 is movably arranged in the button base 28. The second reset member 20 is arranged between the secondary-lock button 29 and the button base 28 to apply a continuous reset force on the secondary-lock button 29. The unlock button 27 includes an abutting portion. The secondary-lock button 29 includes a stop portion 291. The stop portion 291 abuts against the abutting portion under the reset force from the second reset member 20 to allow the unlock button 27 to remain in a locked state. The secondary-lock button 29 is used for preventing accidents caused by accidentally touching the unlock button 27, thereby reducing potential safety hazards during use of the ISOFIX button component 2.

Specifically, the secondary-lock button 29 is hingedly connected to the button base 28 through a pin shaft 21, and the secondary-lock button 29 includes a pressing portion. In order for unlocking, first, the pressing portion needs to be pressed to rotate the secondary-lock button 29, so that the stop portion 291 of the secondary-lock button 29 detaches from the abutting portion of the unlock button 27. Then, the unlock button 27 is pressed downward to allow the fastening member 13 to rotate to unlock an anchor rod 3 on a vehicle. The unlocking operation is simple and safe. The secondary-lock button 29 has a simple structure and is easy to mount.

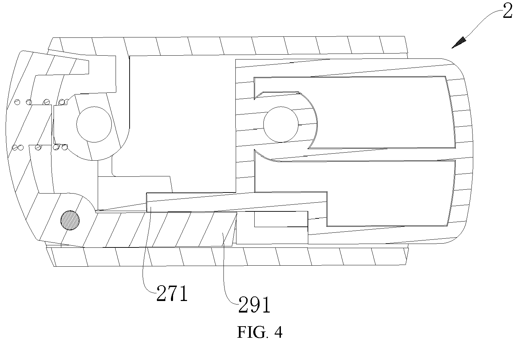

In FIG. 3, the secondary-lock button 29 is in a reset state. In this case, the stop portion 291 abuts against the abutting portion, so that the unlock button 27 cannot slide leftward. In FIG. 4, the secondary-lock button 29 is pressed to rotate, and the second reset member 20 is a spring. In this case, the spring is compressed, and the stop portion 291 moves downward to be staggered with the abutting portion, so that the abutting portion can slide leftward. It can be understood that the abutting portion is exactly above and obstructs the stop portion 291, so that the secondary-lock button 29 cannot be reset. Only after the unlock button 27 is reset by moving rightward, the secondary-lock button 29 can rotate and reset by itself under the drive of the spring.

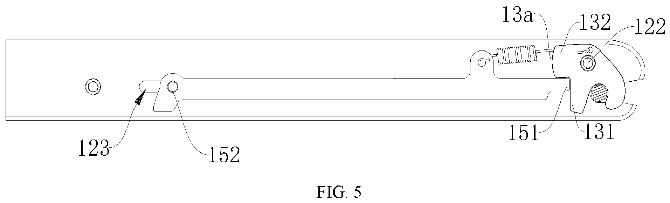

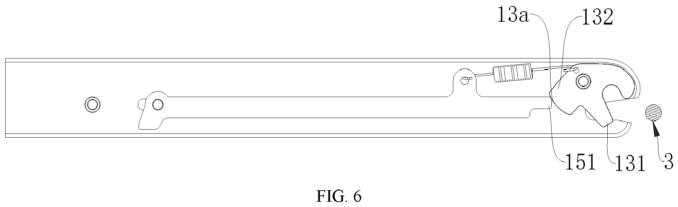

Specifically, as shown in FIG. 5 to FIG. 6, the fastening member 13 includes a first contact portion 131 and a second contact portion 132 protruding relative to the first contact portion 131. The second contact portion 132 includes a curved contact surface 13a. The connecting member 15 includes a third contact portion 151. When the fastening member 13 is in a locked state, the third contact portion 151 abuts against the first contact portion 131. When the fastening member 13 is in an unlocked state, the third contact portion 151 abuts against the second contact portion 132. The first reset member 14 is configured to drive the third contact portion 151 to slide along the curved contact surface 13a.

During the process of the fastening member 13 being gradually connected to an anchor point on the vehicle, the anchor point on the vehicle is pushed against the fastening member 13 to allow the fastening member 13 to swing, and the third contact portion 151 can be driven by the first reset member 14 to smoothly slide along the curved contact surface 13a until the third contact portion 151 comes into contact with the first contact portion 131. The second contact portion 132 protrudes relative to the first contact portion 131, so that after sliding to an end of the curved contact surface 13a, the third contact portion 151 is automatically engaged in the first contact portion 131 to lock the position of the fastening member 13, so that the fastening member 13 cannot continue to rotate. Such a structure is simple and can automatically hook the anchor rod 3 on the vehicle and lock the position of the fastening member 13, thereby reliably locking the anchor rod 3 on the vehicle.

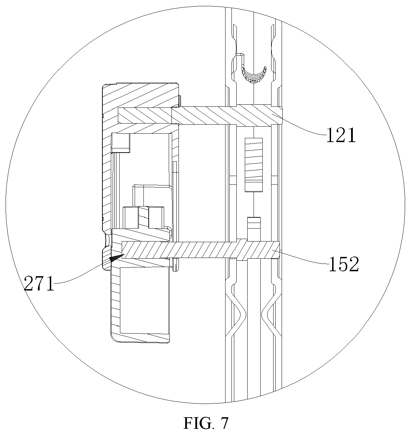

Specifically, as shown in FIG. 5 to FIG. 7, the unlock button 27 is slidably connected to the button base 28, and the connecting member 15 is connected to the unlock button 27 through a connecting shaft 152. The ISOFIX component 1 further includes a housing provided with a guide groove 123, and the connecting shaft 152 is configured to slide along the guide groove 123. The guide groove 123 can limit a sliding stroke of the unlock button 27, thereby preventing the unlock button 27 from detaching from the button base 28.

Specifically, an end of the button base 28 is provided with an opening, the unlock button 27 is partially inserted into the opening and is provided with a recessed groove 271, a first end of the connecting shaft 152 is inserted into the recessed groove 271, and the connecting shaft 152 passes through the guide groove 123. Such a connection structure is simple and easy to process and form.

A second end of the connecting shaft 152 may abut against the housing of the ISOFIX component 1 to better limit the position of the connecting shaft 152. In this embodiment, as can be seen from FIG. 1, a first housing 11 and a second housing 16 are respectively provided with two guide grooves 123, the first end of the connecting shaft 152 is inserted into the recessed groove 271, and the second end of the connecting shaft 152 is inserted into the guide groove 123 on the first housing.

Further, the connecting shaft 152 is provided with a slip-proof structure 1521, and the slip-proof structure 1521 is configured to prevent the connecting shaft 152 from loosening relative to the unlock button 27, to achieve a firmer and more reliable connection between the connecting shaft 152 and the unlock button 27.

The slip-proof structure 1521 is a plurality of convex corrugations, and the plurality of the convex corrugations are triangular prism-shaped. Such a structure is simple and easy to process.

The housing includes a first housing 11 and a second housing 16. The first housing 11 and the second housing 16 are connected through a housing riveting shaft to form a mounting cavity. The fastening member 13, the connecting member 15, and the first reset member 14 are mounted in the mounting cavity.

The unlock button 27, the first housing 11, and the members in the mounting cavity may be assembled first, and then the second housing 16 is combined with the first housing 11. The ISOFIX component 1 has a simple structure and is easy to disassemble and assemble.

The housing riveting shaft includes a first housing riveting shaft 121 and a second housing riveting shaft 122. The first housing riveting shaft 121 is connected to the button base 28. The fastening member 13 is rotatably connected to the second housing riveting shaft 122.

The first housing riveting shaft 121 and the second housing riveting shaft 122 are respectively arranged at two ends of the ISOFIX component 1 in a length direction, to fix the two ends to achieve a good fixing effect. The first housing riveting shaft 121 is also configured to connect the button base 28 and the housing, and not only can fix the first housing 11 and the second housing 16, but also can fix the housing and the button base 28. Similarly, the second housing riveting shaft 122 is also configured to connect the fastening member 13 and the housing, and not only can fix the first housing 11 and the second housing 16, but also can fix the housing and the fastening member 13. The connection structure between the ISOFIX component 1 and the ISOFIX button component 2 is simple, thereby simplifying the structure of the entire ISOFIX button reset structure.

Specifically, as shown in FIG. 2, the connecting member 15 is substantially elongated. The connecting member 15 includes a connecting lug 153. The connecting lug 153 is provided with a first mounting hole 1531. The fastening member 13 is provided with a second mounting hole 133. The first reset member 14 is a tension spring. The first mounting hole 1531 and the second mounting hole 133 are configured for mounting the tension spring. The first reset member 14 has a simple structure and is easy to mount.

Embodiment 2. The present disclosure provides a safety seat, which includes the ISOFIX button reset structure described above. The overall production costs of the safety seat can be reduced by simplifying the ISOFIX button reset structure.

The basic principles, main features and advantages of the present disclosure have been described above. Those skilled in the art should understand that the present disclosure is not limited to the above-mentioned embodiments. The descriptions of the embodiments and the specification are only for illustrating the principles of the present disclosure. Various changes and improvements may be made to the present disclosure without departing from the spirit and scope of the present disclosure, and such changes and improvements all fall within the scope of protection claimed by the present disclosure. The scope of protection claimed by the present disclosure is defined by the appended claims and equivalents thereof.

## Claims

1. An International Standards Organization FIX (ISOFIX) button reset structure, comprising an ISOFIX component and an ISOFIX button component, wherein the ISOFIX component comprises a fastening member, a connecting member, and a first reset member, and the ISOFIX button component comprises an unlock button and a button base; and the connecting member abuts against the fastening member, a first end of the first reset member is connected to the fastening member, a second end of the first reset member is connected to the connecting member, the unlock button is movably arranged in the button base and connected to the connecting member, and the connecting member is configured to be driven by the first reset member to reset the unlock button.

2. The ISOFIX button reset structure according to claim 1, further comprising a secondary-lock button and a second reset member, wherein the secondary-lock button is movably arranged in the button base, the second reset member is arranged between the secondary-lock button and the button base to apply a continuous reset force on the secondary-lock button, the unlock button comprises an abutting portion, the secondary-lock button comprises a stop portion, and the stop portion abuts against the abutting portion under the reset force from the second reset member to allow the unlock button to remain in a locked state.

3. The ISOFIX button reset structure according to claim 2, wherein the secondary-lock button is hingedly connected to the button base through a pin shaft, and the secondary-lock button comprises a pressing portion.

4. The ISOFIX button reset structure according to claim 1, wherein the fastening member comprises a first contact portion and a second contact portion protruding relative to the first contact portion, the second contact portion comprises a curved contact surface, the connecting member comprises a third contact portion, the third contact portion abuts against the first contact portion when the fastening member is in a locked state, the third contact portion abuts against the second contact portion when the fastening member is in an unlocked state, and the first reset member is configured to drive the third contact portion to slide along the curved contact surface.

5. The ISOFIX button reset structure according to any one of claims 1-4, wherein the unlock button is slidably connected to the button base, the connecting member is connected to the unlock button through a connecting shaft, the ISOFIX component further comprises a housing provided with a guide groove, and the connecting shaft is configured to slide along the guide groove.

6. The ISOFIX button reset structure according to claim 5, wherein the connecting shaft is provided with a slip-proof structure, the slip-proof structure is a plurality of convex corrugations, and the plurality of the convex corrugations are triangular prism-shaped.

7. The ISOFIX button reset structure according to claim 5, wherein the housing comprises a first housing and a second housing, the first housing and the second housing are connected through a housing riveting shaft to form a mounting cavity, and the fastening member, the connecting member, and the first reset member are mounted in the mounting cavity.

8. The ISOFIX button reset structure according to claim 7, wherein the housing riveting shaft comprises a first housing riveting shaft and a second housing riveting shaft, the first housing riveting shaft is connected to the button base, and the fastening member is rotatably connected to the second housing riveting shaft.

9. The ISOFIX button reset structure according to any one of claims 1-4, wherein the connecting member is substantially elongated, the connecting member comprises a connecting lug, the connecting lug is provided with a first mounting hole, the fastening member is provided with a second mounting hole, the first reset member is a tension spring, and the first mounting hole and the second mounting hole are configured for mounting the tension spring.

10. A safety seat, comprising the ISOFIX button reset structure according to any one of claims 1-9.
